# EUROPEAN PATENT SPECIFICATION

(11) **EP 1 268 588 B1**
(45) Date of publication and mention of the grant of the patent: **03.03.2010**
(21) Application number: 00983570.3
(22) Date of filing: 18.12.2000
(51) Int. Cl.: C08F 257/02, C08F 212/08, C08F 112/08

(54) **ETHYLENE-AROMATIC VINYL COMPOUND-VINYL NORBONENE TERPOLYMER**
TERPOLYMERE DES ETHYLENS MIT AROMATISCHEN VINYLVERBINDUNGEN UND VINYLNORBONEN
TERPOLYMERE ETHYLENE-COMPOSE VINYLIQUE AROMATIQUE-VINYL-NORBORNENE

(30) Priority: 20.12.1999 KR 9959308
(43) Date of publication of application: 02.01.2003
(73) Proprietor: Samsung Atofina Co., Ltd., Seosan-Si, ChungNam 356-711 (KR)
(72) Inventor: ZHANG, Xuequan, Yuseong-gu Taejeon 305-390 (KR); LIM, Jae, Gon, Yuseong-gu Taejeon 305-390 (KR); YOON, Sung, Cheol, Chungnang-gu Seoul 131-222 (KR); KIM, Hyun, Joon Ssangyong 3rd Apt. 605-1103, Kyung-Ki-Do, 449-843 (KR); LEE, Young, Sub c/o Samsung Gen. Chemiclas Co.,Ltd, Seosang-shi, Chungcheongnam-do 352-870 (KR)
(74) Representative: Grünecker, Kinkeldey, Stockmair & Schwanhäusser Anwaltssozietät
(86) International application number: PCT/KR2000/001483
(87) International publication number: WO 2001/046282

(56) References cited:
- EP-A- 0 044 233
- EP-A- 0 099 646
- EP-A- 0 344 353
- EP-A- 0 509 396
- EP-A- 0 807 642
- CA-A- 2 274 213
- JP-A- 57 177 004
- US-A- 4 123 602
- US-A- 5 789 510
- US-A- 5 883 213

## Description

The present invention relates to an ethylene/aromatic vinyl compound/vinylnorbornene terpolymer. More particularly, the present invention relates to an ethylene/aromatic vinyl compound/vinylnorbornene terpolymer with high activity, a high molecular weight and a high content of aromatic vinyl compound, which can be prepared with a small amount of co-catalyst under mild condition.

Copolymerization of ethylene and an aromatic vinyl compound such as styrene has been studied for a couple of decades. At the beginning of time, a polymerization method using a heterogeneous Ziegler-Natta catalyst was introduced (Polymer Bulletin 20, 237-241 (1988)). However, the conventional method has shortcomings in that the catalyst has poor activity, the copolymer has a low content of styrene and poor uniformity, and the copolymer is mostly a homopolymer. Further, a copolymer of ethylene and styrene has been prepared using a homogeneous Ziegler-Natta catalyst system comprising a transition metal compound and an organoaluminum compound.

Japanese Patent Laid-Open No. 7-53618 discloses a pseudo-random styrene/ethylene copolymer prepared by using a catalyst with a constrained geometrical structure, which does not have head-to-tail bonds. The phenyl groups in the alternating structure of the pseudo-random styrene/ethylene copolymer do not have stereoregularity. When the pseudo-random styrene/ethylene copolymer has a certain amount of styrene, the copolymer shows the same properties as an amorphous resin with no crystallinity

Japanese Patent Laid-Open No. 6-49132 and Polymer Preprints (Japan 42, 2292 (1993)) disclose a method for producing a styrene/ethylene copolymer which is a pseudo random copolymer with no head-to-tail bonds. The styrene/ethylene copolymer is prepared a bridged indenyl zirconium complex and a cocatalyst. According to the Polymer Preprints, the ethylene/styrene alternating structure in the pseudo random copolymer does not show stereoregularity.

Further, Japanese Patent Laid-Open No.3-250007 and Stud. Surf. Sci. Catal. 517 (1990) disclose a styrene/ethylene alternating copolymer prepared by using a Ti complex having a substituted phenol type ligand. The copolymer has a styrene/ethylene alternating structure but has neither an ethylene chain nor styrene chains including head-to-head bonds and tail-to-tail bonds. The copolymer is a perfect alternating copolymer with an alternating degree of at least 70, preferably at least 90. However, as the ratio of ethylene to styrene is 50 % to 50 % by weight, it is difficult to vary the contents of the composition. The phenyl groups forms isotactic streroregularity of which isotactic diad index is 0.92. As the copolymer has a molecular weight of 20,000 or below, the physical properties are poor. The catalyst has poor activity and a homopolymer such as syndiotactic polystyrene is obtained. Therefore, the polymerization method is not successfully commercialized.

Meanwhile, Macromol. Chem., 191, 2387 (1990) has reported a styrene/ethylene copolymer prepared by using CpTiCl₃ as a transition metal compound and methyl alumoxane as a cocatalyst. The copolymer includes pseudo random copolymer with no styrene chains. The catalyst shows poor activity. The publication does not mention about stereoregularity of the phenyl groups.

Eur. Polym. J., 31, 79(1995) discloses a polymerization of ethylene and styrene using a catalyst of CpTiBz₃. According to the process, homopolymers such as polystyrene and syndiotactic polystyrene are obtained instead of copolymers of styrene/ethylene.

Macromolecules, 29, 1158 (1996) discloses polymerization of ethylene/styrene using CpTiCl3 as a catalyst and a boron tytpe cocatalyst, resulting to prepare a mixture of a copolymer having a high degree of alternating structure, a syndiotactic polystyrene and a polyethylene. The publication does not mention about stereoregularity of the phenyl groups.

U.S. Patent No. 5,883,213 discloses an ethylene/styrene copolymer having a weight average molecular weight of at least 81,000, having a styrene content of from 1 to less than 55 % by molar fraction, wherein the stereoregularity of phenyl groups in the alternating structure of ethylene and styrene is represented by an isotactic diad index of more than 0.75.

Japanese Patent Laid-Open Nos. 3-163088 and 7-53618 disclose a process of copolymerization of styrene/ethylene using a large amount of an organic aluminum. However, this process is not practical since it produces not only ethylene/styrene copolymer but also a large amount of syndiotactic polystyrene under mild condition.

Accordingly, the present inventors have developed an ethylene/aromatic vinyl compound/vinylnorbornene terpolymer with high activity, a high molecular weight and a high content of aromatic vinyl compound, which can be prepared with a small amount of co-catalyst under mild polymerization condition.

A feature of the present invention is the provision of a process of preparing ethylene/aromatic vinyl compound copolymer which is designed to improve low activity of catalyst, a low styrene content, an excess amount of homopolymers by-product and uniform composition in the heterogeneous Ziegler-Natta catalyst system.

Another feature of the present invention is the provision of a process of preparing a large amount of ethylene/aromatic vinyl compound copolymer using a small amount of a cocatalyst.

A further feature of the present invention is the provision of an ethylene/aromatic vinyl compound copolymer having double bonds in which branching and/or cross-linking can be carried out.

A further feature of the present invention is the provision of an ethylene/aromatic vinyl compound copolymer having double bonds to which long chain branches can be introduced.

A further feature of the present invention is the provision of an ethylene/aromatic vinyl compound copolymer having an improved viscosity at melting state and an improved processability by introducing long chain branches thereto.

The above and other objects and advantages of this invention will be apparent from the ensuing disclosure and appended claims.

The object of the present invention is achieved by a method of preparing an ethylene/aromatic vinyl compound/vinylnorbornene terpolymer according to the present invention by copolymerizing 50 ∼ 90 mol % of ethylene, at least 0.1 mol% of an aromatic vinyl compound and 0.01 - 10 mol % of a vinylnorbornene under a catalyst system consisting of a transition metal compound represented by the following formula ( I ) and a cocatalyst: 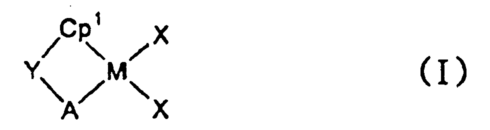 where M represents a transition metal of Group IV of the Periodic Table such as titanium, zirconium or hafnium;
Cp¹ is a non-substituted cyclopentadienyl group; a cyclopentadienyl group with 1 to 4 linear alkyl substitutes; an indenyl group; a tetrahydroindenyl group; a substituted indenyl group; a fluorenyl group: an octahydrofluorenyl group; or a substituted fluorenyl group;
Y is a hydrogen or a silyl group of C₁₋₁₀, an alkyl group of C₁₋₁₀, an aryl group of C₁₋₁₀, or a combination thereof;
A is an alkyl group of C₁₋₃₀, an alkylamide group of C₁₋₃₀ or a derivative of cyclopentadienyl group which is identical to Cp': and
X is selected from the group consisting of a hydrogen atom, a halogen atom, an alkyl group, an aryl group or a diene group.

When A is a derivative of the cyclopentadienyl group, the transition metal complex may be a racemic mixture of d-form or *l*-form. Either d-form or *l*-form can be used in the present invention.

Further embodiments of the invention are set forth in the subclaims 2 to 11.
Fig. 1 is a ¹³C NMR spectrum of the terpolymer obtained in Example 1;
Fig. 2 shows a micro structure and quantitative analysis of styrene and vinylnorbornene comonomers in the terpolymers by using ¹³C-NMR spectrum measurement;
Fig. 3 is a comparative diagram showing the styrene content to the ratio of the amount of injected styrene monomer to the copolymer under 60 psi of C₂;
Fig. 4 is a comparative diagram showing the styrene content to the ratio of the amount of injected styrene monomer to the copolymer under 150 psi of C₂; and
Fig. 5 is a graph of gel permeation chromatography(GPC) of Example 1 and Comparative Example 1.

The ethylene/aromatic vinyl compound/vinylnorbornene terpolymer according to the present invention is prepared by copolymerizing 50 ∼ 90 mol % of ethylene, at least 0.1 mol % of an aromatic vinyl compound and 0.01-10 mol % of a vinylnorbornene under a catalyst system. The catalyst system consists of a transition metal compound and a cocatalyst.

The polymerization of ethylene/aromatic vinyl compound/vinylnorbornene terpolymer is preferably carried out at 1 ∼ 1000 bar and 0 ∼ 200 °C. Over the self-polymerization temperature of each monomer, free radical polymerization occurs to produce a small amount of homopolymer.

The aromatic vinyl compound includes styrene compounds and styrene derivatives such as alkylstyrene, halogenated styrene, halogen-substituted alkylstyrene, alkoxystyrene, vinylbiphenyl, vinylphenylnaphthalene, vinylphenylanthracene, vinylphenylpyrene, trialkylsilylvinylbiphenyl, trialkylstenybiphenyl, alkylsilylstyrene, carboxymethylstyrene, alkylesterstyrene, vinylbenzenesulphonic acid ester, vinylbenzyldialkoxyphosphide.

The representative examples of alkylstyrene are styrene, methylstyrene, ethylstyrene, butylstyrene, p-methylstyrene, p-tert-butylstyrene, and dimethylstyrene; those of halogenated styrene are chlorostyrene; bromostyrene, and fluorostyrene; those of halogen-substituted alkylstyrene are chloromethylstyrene, bromomethylstyrene, and fluoromethylstyrene; those of alkoxystyrene are methoxystyrene, ethoxystyrene, and butoxystyrene; those of vinylbiphenyl are 4-vinylbiphenyl, 3-vinylbiphenyl, and 2-vinylbiphenyl; those of vinylphenylnaphthalene are 1-(4-vinylbiphenylnaphthalene), 2-(4-vinylbiphenylnaphthalene), 1-(3-vinylbiphenylnaphthalene), 2-(3-vinylbiphenylnaphthalene), and 1-(2-vinylbiphenylnaphthalene ); those of vinylphenylanthracene are 1-(4-vinylphenyl)anthracene, 2-(4-vinylphenyl)anthracene, 9-(4-vinylphenyl)anthracene, 1-(3-vinylphenyl)anthracene, 9-(3-vinylphenyl)anthracene, and 1-(4-vinylphenyl)anthracene; those of vinylphenylpyrene are 1-(4-vinylphenyl)pyrene, 2-(4-vinylphenyl)pvrene, 1-(3-vinylphenyl)pyrene, 2-(3-vinylphenyl)pyrene, 1-(2-vinylphenyl)pyrene, and 2-(2-vinylphenyl)pyrene; that of trialkylsilylvinylbiphenyl is 4-vinyl-4-trimethylsilylbiphenyl; and those of alkylsilylstyrene are p-trimethylsilylstyrene, m-trimethylsilylstyrene, o-trimethylsilylstyrene, p-triethylsilylstyrene, m-triethylsilylstyrene, and o-triethylsilylstyrene.

In the copolymer, the content of the aromatic vinyl compound is at least 0.1 mol %, preferably 0.5 ∼ 55 mol %, more preferably 1.0 ∼ 55 mol %.

The vinylnorbornene being polymerized by catalyst system of the present invention is a non-conjugated diene which includes dicyclopentadiene, 5-ethylidene-2-norbornene and methyl hexadiene. The vinylnorbornene is 0.01 ∼ 10 mol % in the copolymer.

The ethylene/aromatic vinyl compound/vinylnorbornene terpolymer according to the present invention is prepared under a catalyst system which consists of a transition metal compound and a cocatalyst. The transition metal compound is represented by the following formula ( I ): 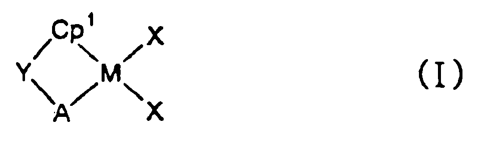 where M represents a transition metal of Group IV of the Periodic Table such as titanium, zirconium or hafnium;
Cp¹ is a non-substituted cyclopentadienyl group; a cyclopentadienyl group with 1 to 4 linear alkyl substitutes; an indenyl group; a tetrahydroindenyl group; a substituted indenyl group; a fluorenyl group; an octahydrofluorenyl group; or a substituted fluorenyl group;
Y is a hydrogen or a silyl group of C₁₋₁₀, an alkyl group of C₁₋₁₀, an aryl group of C₁₋₁₀, or a combination thereof;
A is an alkyl group of C₁₋₃₀, an alkylamide group of C₁₋₃₀ or a derivative of cyclopentadienyl group which is identical to Cp'; and
X is selected from the group consisting of a hydrogen atom, a halogen atom, an alkyl group, an aryl group or a diene group.

When A is a derivative of the cyclopentadienyl group, the transition metal complex may be a racemic mixture of d-form or *l*-form. Either d-form or *l*-form can be used in the present invention.

In the present invention, the metallocene catalyst is used with a cocatalyst. The cocatalyst is an organometallic compound such as alkylaluminoxane and alkylaluminum compound, which are known to an ordinary person in the art. The representative examples of alkylaluminoxane are methylaluminumoxane (MAO) and modified methylaluminumoxane (MMAO). The alkylaluminoxane includes an alkylaluminoxane having a repeating unit of the following formula ( II ), a linear alkylaluminoxane represented by the following formula (III), and a cyclic alkylaluminoxane represented by the following formula (IV): 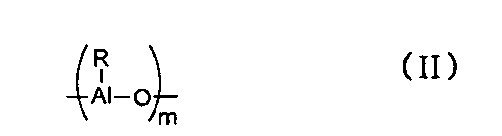 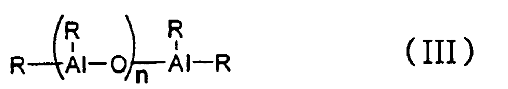 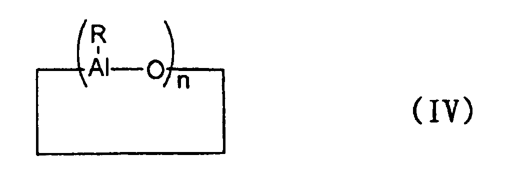 where R is an hydrogen, an alkyl group of C₁₋₅ or an aryl group of C₁₋₆, being same or different each other, and m and n are an integer of 0 ∼ 100.

Alternatively, the co-catalyst of the present invention may be a mixture of different aluminoxanes, a mixture of aluminoxane and alkylaluminum such as trimethyl aluminum, triethyl aluminum, triisobutyl aluminum and dimethyl aluminum chloride.

The molar ratio of aluminum of organometallic compound to transition metal of Group IV of metallocene catalyst of the present invention is in the range from 1 : 1 to 1 × 10⁶ : 1, preferably from 10 : 1 to 1 × 10⁴ : 1.

The co-catalyst of the present invention can be a mixture of non-coordinated Lewis acid and alkylaluminum. Examples of the non-coordinated Lewis acid include N, N-dimethylanilinium tetrakis(pentafluorophenyl)borate, triphenylcarbenium tetrakis(pentafluorophenyl)borate, ferrocerium tetrakis (pentafluorophenyl)borate, and tris(pentafluorophenyl)borate. Examples of the alkylaluminum include trimethylaluminum, triethyl aluminum, diethyl aluminum chloride, dimethyl aluminum chloride, triisobutyl aluminum, diisobutyl aluminum and dimethyl aluminum chloride, tri(n-butyl)aluminum, tri(n-propyl)aluminum, and triisopropylaluminum.

The molar ratio of the non-coordinated Lewis acid to the transition metal in the catalyst system according to the present invention is preferably in the range from 0.1 : 1 to 20 : 1 and more preferably in the range of about 1 : 1. If the molar ratio of the alkylaluminum to transition metal in the catalyst system is less than 0.01 : 1, it tends to be difficult to effectively activate the metal complex, and if it exceeds 100 : 1, such is economically disadvantageous.

To the copolymer of the present invention, additives or adjuvants which are commonly used for polymers, may be incorporated within a range not to adversely affect the effects of the present invention. Preferred additives or adjuvants include, for example, an antioxidant, a lubricant, a plasticizer, an ultraviolet ray absorber, a stabilizer, a pigment, a colorant, a filler and/or a blowing agent.

The polymerization temperature is usually from 0 to 140 °C, preferably from 30 to 100 °C. A polymerization temperature of -78 °C or lower is industrially disadvantageous, and a temperature higher than 200 °C is not suitable, since decomposition of the metal complex will take place.

The ethylene/aromatic vinyl compound/vinylnorbornene terpolymer of the present invention has an average molecular weight of more than 5,000, more preferably 10,000 and most preferably 30,000, and the melting-index(MI; ASTM D-1238; method A and condition E) of 0.001 ∼ 1000, more preferably 0.01 ∼ 100 and most preferably 0.1 ∼ 30.

Ethylene/aromatic vinyl compound/vinylnorbornene terpolymer sample of 40 ∼ 50 mg was dissolved in mixed solution of hot trichlorobenzene and benzene-d-6 followed by putting into the 5 mm NMR column, and measured by 100MHz ¹³C NMR spectrum.

Before polymerization, the monomers and solvent, if any, are purified by vacuum distillation or by contacting with alumina, silica or molecular sieve. Also, a trialkylaluminum compound, an alkali metal and a metal alloy, especially Na/K may be used to remove the impurities.

The terpolymer of the present invention may be blended with a synthetic or natural polymer regardless of modification. Especially, the present invention may be preferably blended with polyethylene, ethylene/a-olefin copolymer, polypropylene, polyamide, polyisocyanate, polyurethane, polyacrylonitrile, silicone and polyphenylene oxide, and styrene copolymer such as ethylene-styrene copolymer and polystyrene, which is used in the range from 0.5 to 50 % by weight.

The terpolymer of the present invention, preferably ethylene-styrene-vinylnorbomene terpolymer is used as a modifier for a composition of asphalt or bitumen. "Bitumen" means a hydrocarbon compound of solid, semi-solid, liquid or gas in natural. Preferably, the present invention uses solid, semisolid or liquid bitumen. Commercially speaking, the bitumen is generally limited to asphalt, tar and pitch. The amount of the bitumen used herein is preferably 6 ∼ 99 parts by weight, more preferably 80 ∼ 98 parts by weight.

The ethylene-aromatic vinyl compound-vinylnorbornene terpolymer of the present invention is a material which retracts its original length after drawing to the length of 2 times at room temperature and exhibits physical properties of as an elastomer by ASTM Special Technical Rullet in No.184, a thermoplastic or thermosetting resin. Particularly, the terpolymer of the present invention can be easily transformed not only by branching, grafting, hydrogenation, cross-linking but also by introducing functional groups to the double bonds, for example, by sulfonation or chlorination.

The present invention will be described in more detail by the following Examples. The Examples are given only to illustrate the present invention.

### Examples

### Example 1

To 2L autoclave was added MAO (1 mmol of Al), 200 mL of styrene and 20 mL of vinylnorbornene. The solution was agitated heating up to 70 °C. After adding 20 µmol of dimethylsilyl (t-butylamidotetramethylcyclopentadienyl)-titanium dichloride to the solution, copolymerization was initiated by adding ethylene at 4 bar. The polymerization was carried out until the solution could hardly be agitated, and the amount of ethylene to be used, exothermic calory and agitation state were measured. After 15 minutes, the ethylene gas was released. The reaction was terminated by adding HCl/methanol solution followed by washing and recycling the sticky polymer. Terpolymer of 62 g was obtained after treating with a small amount of anti-oxidant and drying at 130°C for more than 6 hours under reduced pressure.

### Example 2

The polymerization process was conducted in the same manner as in Example 1 except adding 200 mL of styrene and 30 mL of vinylnorbornene and terminating the reaction after 15 minutes. Terpolymer of 41 g was obtained.

### Example 3

The polymerization process was conducted in the same manner as in Example 1 except adding 200 mL of styrene and 10 mL of vinylnorbornene and terminating the reaction after 150 minutes. Terpolymer of 52 g was obtained.

### Example 4

The polymerization process was conducted in the same manner as in Example 1 except adding 200 mL of styrene and 5 mL of vinylnorbornene and terminating the reaction after 120 minutes. Terpolymer of 39 g was obtained.

### Example 5

The polymerization process was conducted in the same manner as in Example 1 except adding 100 mL of styrene and 20 mL of vinylnorbornene and terminating the reaction after 45 minutes. Terpolymer of 27 g was obtained.

### Example 6

The polymerization process was conducted in the same manner as in Example 1 except adding 100 mL of styrene, 10 mL of vinylnorbornene and 100 mL of heptane and terminating the reaction after 20 minutes. Terpolymer of 22 g was obtained.

### Example 7

The polymerization process was conducted in the same manner as in Example 1 except adding 50 mL of styrene, 5 mL of vinylnorbornene and 150 mL of heptane and terminating the reaction after 31 minutes. Terpolymer of 17 g was obtained.

### Example 8

The polymerization process was conducted in the same manner as in Example 1 except adding 100 mL of styrene, 10 mL of vinylnorbornene and 300 mL of Isopar E and terminating the reaction after 120 minutes. Terpolymer of 18 g was obtained.

### Example 9

The polymerization process was conducted in the same manner as in Example 1 except adding 50 mL of styrene, 5 mL of vinylnorbornene and 150 mL of Isopar E and terminating the reaction after 120 minutes. Terpolymer of 9.1 g was obtained.

### Example 10

The polymerization process was conducted in the same manner as in Example 1 except adding 1000 mL of styrene, 2 mL of vinylnorbornene and reacting for 60 minutes under the pressure of 10 bar of ethylene. Terpolymer of 126 g was obtained.

### Example 11

The polymerization process was conducted in the same manner as in Example 1 except adding 750 mL of styrene, 2 mL of vinylnorbornene and reacting for 60 minutes under the pressure of 10 bar of ethylene. Terpolymer of 147 g was obtained.

### Example 12

The polymerization process was conducted in the same manner as in Example 1 except adding 500 mL of styrene, 2 mL of vinylnorbornene and 500 mL of hexane and reacting for 60 minutes under the pressure of 10 bar of ethylene. Terpolymer of 137 g was obtained.

### Example 13

The polymerization process was conducted in the same manner as in Example 1 except adding 250 mL of styrene, 2 mL of vinylnorbornene and 750 mL of hexane and reacting for 60 minutes under the pressure of 10 bar of ethylene. Terpolymer of 132 g was obtained.

### Example 14

The polymerization process was conducted in the same manner as in Example 1 except adding 100 mL of styrene, 2 mL of vinylnorbornene and 900 mL of hexane and reacting for 60 minutes under the pressure of 10 bar of ethylene. Terpolymer of 111 g was obtained.

### Example 15

The polymerization process was conducted in the same manner as in Example 1 except adding 50 mL of styrene, 2 mL of vinylnorbornene and 1000 mL of hexane and reacting for 60 minutes under the pressure of 10 bar of ethylene. Terpolymer of 98 g was obtained.

### Example 16

The polymerization process was conducted in the same manner as in Example 1 except adding 10 mL of styrene, 2 mL of vinylnorbornene and 1000 mL of hexane and reacting for 60 minutes under the pressure of 10 bar of ethylene. Terpolymer of 124 g was obtained.

### Comparative Examples

### Comparative Example 1

To 1L autoclave was added MAO (1 mmol of Al). 200 mL of styrene. The solution was agitated heating up to 70 °C. After adding 20 µmol of CGC-T, copolymerization was initiated by adding ethylene of 4 bar. The polymerization was carried out until the solution could hardly be agitated any more, and the amount of ethylene to be used, exothermic calory and agitation state were measured. After 60 minutes, the ethylene gas was discharged. The reaction was terminated by adding HCl/methanol solution followed by washing and recycling the sticky polymer. Copolymer of 49 g was obtained after treating with a small amount of anti-oxidant and drying at 130 °C for more than 6 hours under reduced pressure.

### Comparative Example 2

The polymerization process was conducted in the same manner as in Comparative Example 1 except adding 150 mL of styrene and 50 mL of hexane. Copolymer of 35 g was obtained.

### Comparative Example 3

The polymerization process was conducted in the same manner as in Comparative Example 1 except adding 50 mL of styrene and 150 mL of hexane. Copolymer of 24 g was obtained.

### Comparative Example 4

The polymerization process was conducted in the same manner as in Comparative Example 1 except adding 1000 mL of styrene and reacting under the pressure of 10 bar of ethylene. Copolymer of 78 g was obtained.

### Comparative Example 5

The polymerization process was conducted in the same manner as in Comparative Example 1 except adding 500 mL of styrene and 500 mL of hexane and reacting under the pressure of 10 bar of ethylene. Copolymer of 61 g was obtained.

### Comparative Example 6

The polymerization process was conducted in the same manner as in Comparative Example 1 except adding 100 mL of styrene and 900 mL of hexane and reacting under the pressure of 10 bar of ethylene. Copolymer of 68 g was obtained.

### Comparative Example 7

The polymerization process was conducted in the same manner as in Example 1 except adding 1000 mL of styrene and 10 mL of 1,7-octadiene instead of vinylnorbornene and reacting for 60 minutes under the pressure of 10 bar of ethylene. Terpolymer of 14.3 g was obtained.

### Comparative Example 8

The polymerization process was conducted in the same manner as in Example 1 except adding 1000 mL of styrene and 5 mL of 1,7-octadiene instead of vinylnorbornene and reacting for 60 minutes under the pressure of 10 bar of ethylene. Terpolymer of 5.9 g was obtained.

The polymerization condition and test results of the Examples and Comparative Examples are shown in Table 1.

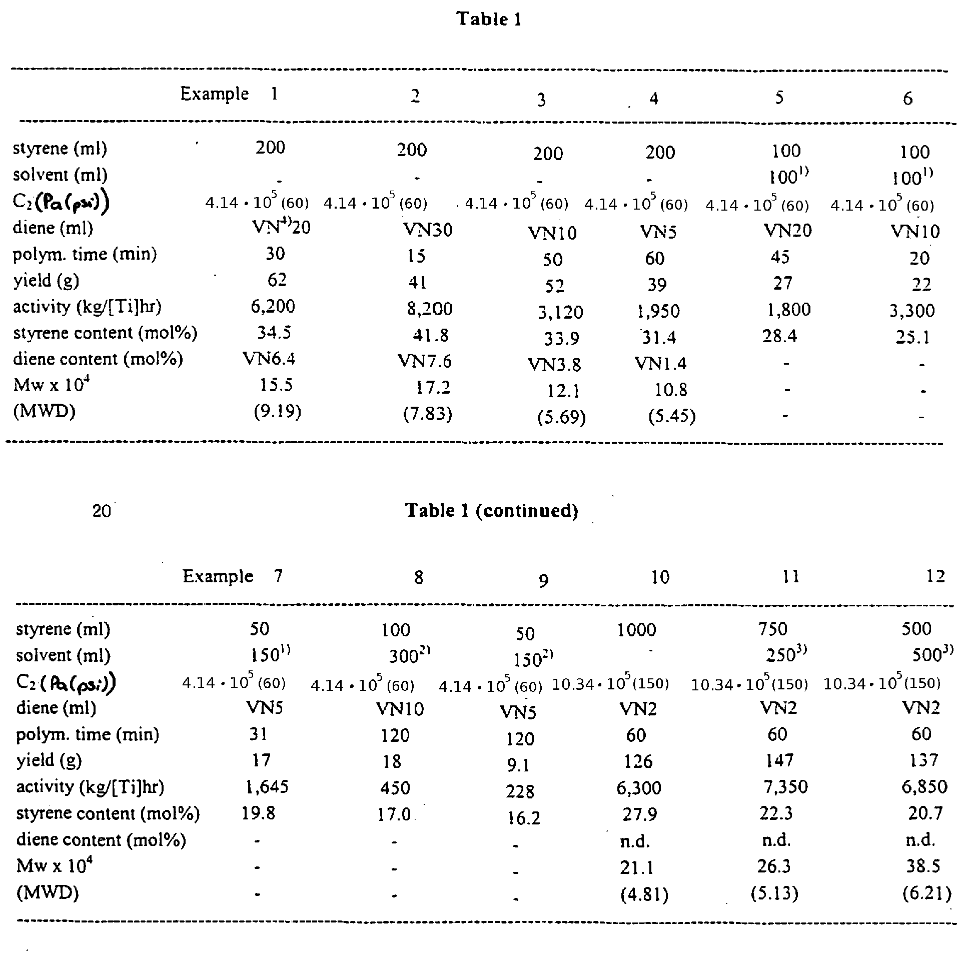

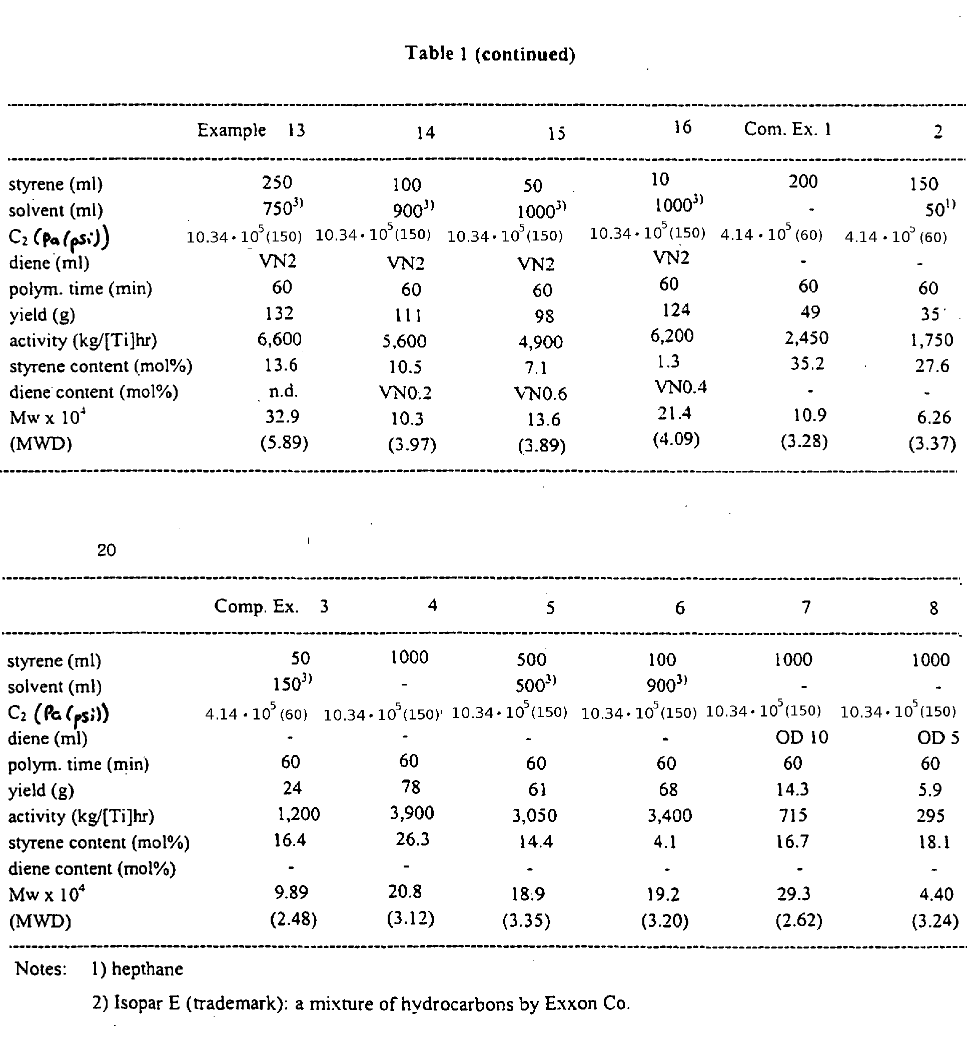

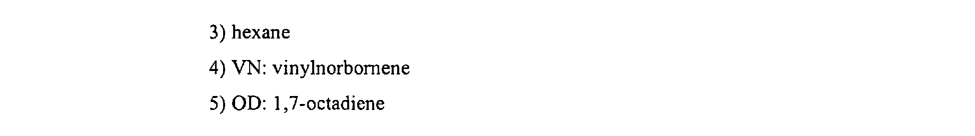

The polymerization of the Examples and Comparative Examples were conducted with metallocene catalyst of 20µ mol and MAO/Ti = 500 at 70 °C.

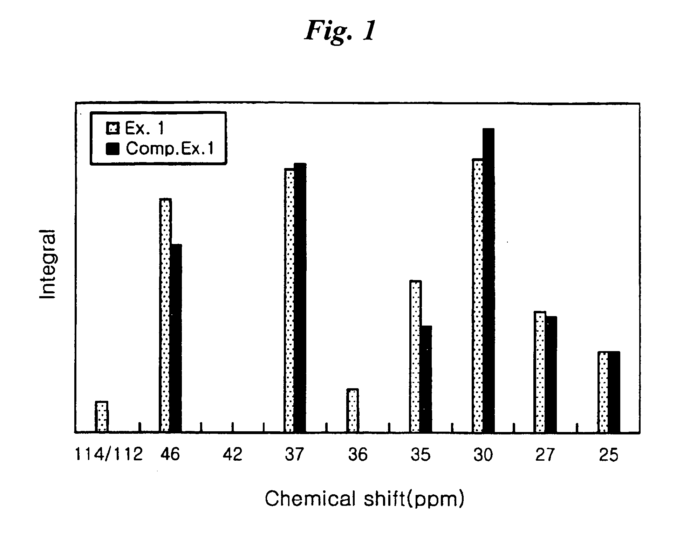

The structure of terpolymers prepared above was measured by using ¹³C-NMR. The ¹³C-NMR of the polymers of Example 1 and Comparative Example 1 was shown in Figure 1. The ¹³C-NMR measurement was carried out at 100 °C by using TMS (tetramethylsilane) in the solvent mixture of trichlorobezene and bezene-d-6 mixed solution. The terpolymers are partially soluble in THF or CHCl3 at room temperature, and completely soluble in boiling THF. As a result of ¹³C-NMR measurement, it is known that the chemical structure of the terpolymer is pseudo-random structure as disclosed in Macromolecules, 1980, 849, because no peak was shown near 42 ppm attributable to head-to-tail bond chain of styrene.

Further, the terpolymer of the present invention showed the distinct peaks of terminal double bond near of 112 and 114 ppm, which indicates that most of the vinylnorbornene monomers in the copolymer participate in polymerization using the double bond within the ring, but not the double bond outside the ring. This indicates that the reaction rate of the double bond within the ring is faster than that of the terminal double bond, because the former is relatively unstable. The content of the vinylnorbornene was quantitatively analyzed by the peaks from the ¹³C-NMR spectrum measurement, and the result are shown in Table 1.

As shown in Comparative Examples 7 and 8, the terpolymers using 1,7-octadiene have a low activity and low content of 1,7-octadiene in the terpolymer, which indicates that the double bond within the vinylnorbornene ring participates in the polymerization.

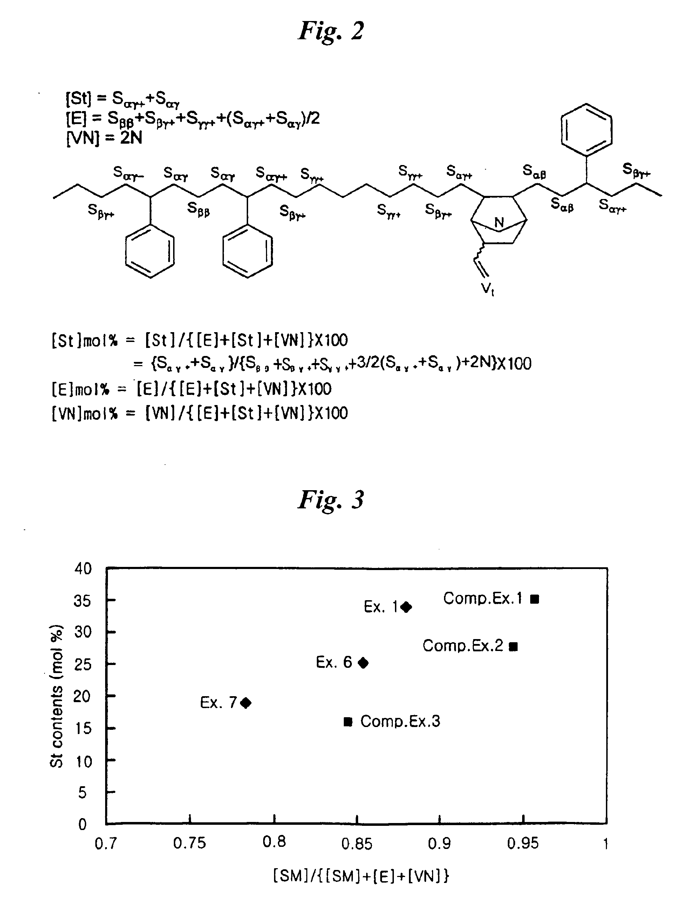

Fig. 2 shows a micro structure and quantitative analysis of styrene and vinylnorbornene comonomers in the terpolymer by using ¹³C-NMR spectrum measurement, wherein S is secondary carbon; Vt is terminal vinyl group; [St], [E] and [VN] are content of styrene, ethylene and vinylnorbornene respectively.

The result of quantitative analysis and integral depending on chemical shift of each carbon in the micro structure in Examples 1 are shown in Table 2.

**Table 2**

| Peak(ppm) | Vₜ^{a} | T | S_{αγ} | N | S_{αγ-} | S_{γγ-} | S_{βγ+} | S_{ββ} | Mol% | |
|---|---|---|---|---|---|---|---|---|---|---|
| | (114, 112) | (46) | (37) | (36) | (35) | (30) | (27) | (25) | [SM] | [VN] |
| Example 1 | 12.31 | 103.1 | 86.62 | 12.61 | 48.46 | 100.0 | 41.03 | 23.11 | 34.5 | 6.4 |

The stretching band due to the terminal double bond of C=C and =C-H near 1636 and 995 cm⁻¹ respectively, in the FT-IR measurement indicates that terminal double bonds exist in the terpolymer.

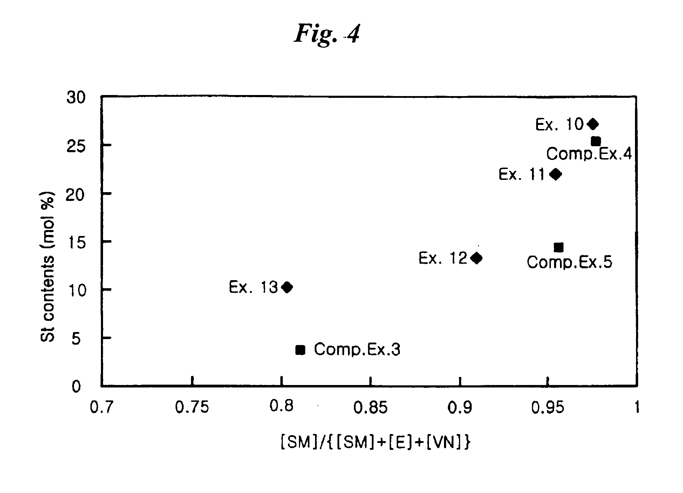

In the present invention, when vinylnorbornene was used in the polymerization, not only the content of the incorporated styrene but also the activity of the catalyst increased comparing to ethylene-styrene copolymerization at the same condition. The results are shown in Figures 3 and 4. In case of Examples 1-9, when the molar ratio of the styrene used is the same, the styrene content in the terpolymer was increased more than 50 % as shown in Figure 3, and still more increased, when the molar ratio of the incorporated vinylnorbornene was increased. Figure 4 shows the case of Examples 10-16, which is the result of incorporation of a small amount of vinylnorbornene (2ml). Compared Figure 3 with Figure 4, the mol % of the incorporated styrene of the terpolymer in the Example 1-9 was more increased.

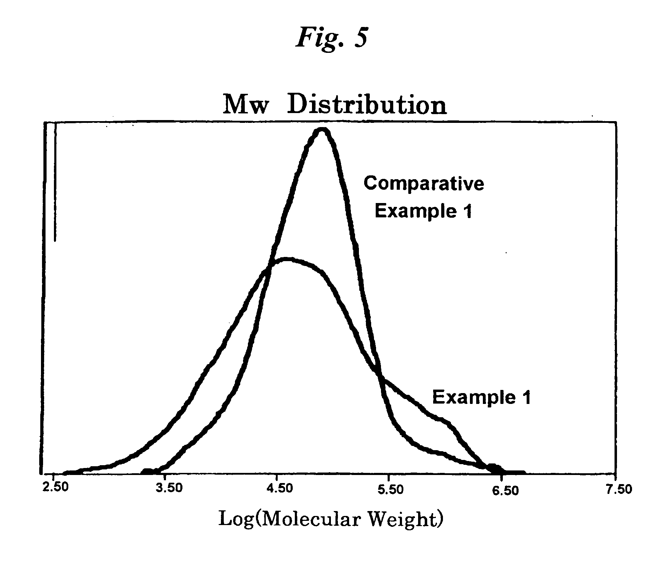

Further, the molecular weights and the molecular weight distribution of the terpolymer of the present invention were increased altogether compared with the ethylene-styrene copolymer under the same condition. Fig.5 shows the result of gel permeation chromatography (GPC) of Example 1 and Comparative Example 1. The peaks are shown in the region of polymer. Example 1 has higher molecular weight distribution due to addition of vinylnorbornene unlike Comparative Example 1.

As compared with a conventional ethylene/styrene copolymer, the ethylene/aromatic vinyl compound/vinylnorbornene terpolymer of the present invention has various improved properties such as high activity, a high molecular weight, a wide molecular weight distribution and a high content of styrene. Especially, Examples 10-13 concern about terpolymerization by adding a trace of vinylnorbornene, which also indicate that although the vinylnorbornene was not found by ¹³C NMR analysis, the activity, molecular weight, molecular weight distribution and content of styrene were increased.

In the above, the present invention was described based on the preferred embodiment of the present invention.

## Claims

1. A method of preparing an ethylene/aromatic vinyl compound/vinylnorbornene terpolymer by copolymerizing 50-90 mol % of ethylene, at least 0.1 mol % of an aromatic vinyl compound and 0.01-10 mol % of a vinylnorbornene under a catalyst system consisting of a transition metal compound represented by the following formula (I) and a cocatalyst: 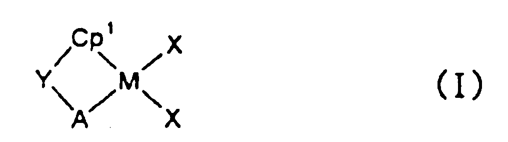 where M represents a transition metal of Group IV of the Periodic Table such as titanium, zirconium or hafnium;
Cp¹ is a non-substituted cyclopentadienyl group; a cyclopentadienyl group with 1 to 4 linear alkyl substitutes; an indenyl group; a tetrahydroindenyl group; a substituted indenyl group; a fluorenyl group; an octahydrofluorenyl group; or a substituted fluorenyl group;
Y is a hydrogen or a silyl group of C₁₋₁₀, an alkyl group of C₁₋₁₀, an aryl group of C₁₋₁₀, or a combination thereof;
A is an alkyl group of C₁₋₃₀, an alkylamide group of C₁₋₃₀ or a derivative of cyclopentadienyl group which is identical to Cp¹; and
X is selected from the group consisting of a hydrogen atom, a halogen atom, an alkyl group, an aryl group or a diene group.

2. The method of claim 1, wherein said cocatalyst is an organometallic compound or a mixture of a non-coordinated Lewis acid and an alkylaluminum compound.

3. The method of claim 2, wherein said organometallic compound is an alkylaluminoxane or an organoaluminum compound.

4. The method of claim 3, wherein said alkylaluminoxane is methylaluminumoxane (MAO) or a modified methylaluminumoxane (MMAO).

5. The method of claim 3, wherein said organoaluminum compound includes an alkylaluminoxane having a repeating unit of the following formula (II), said alkylaluminoxane including a linear alkylaluminoxane represented by the following formula (III), and a cyclic alkylaluminoxane represented by the following formula (IV) : 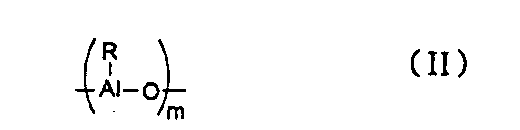 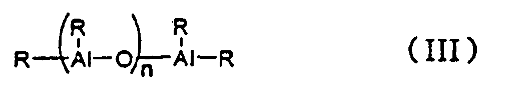 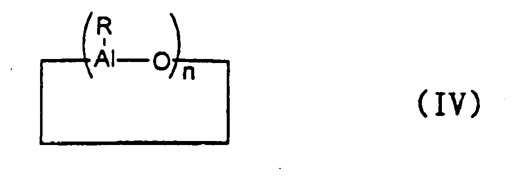 wherein R is an hydrogen, alkyl group of C₁₋₅ or aryl group of C₁₋₆ and may be the same or different from each other, and m and n are an integer of 0-100.

6. The method of claim 2, wherein said non-coordinated Lewis acid is selected from the group consisting of N, N-dimethylanilinium tetrakis(pentafluorophenyl)borate, triphenylcarbenium tetrakis(pentafluorophenyl)borate, ferrocerium tetrakis (pentafluorophenyl)borate, and tris(pentafluorophenyl)borate.

7. An ethylene/aromatic vinyl compound/vinylnorbornene terpolymer consisting essentially of 50 - 90 mol% of ethylene, at least 0.1 mol% of aromatic vinyl compound and 0.01-10 mol% of vinylnorbornene, which is polymerized under a catalyst system consisting of a transition metal compound represented by the following formula (I) and a cocatalyst: 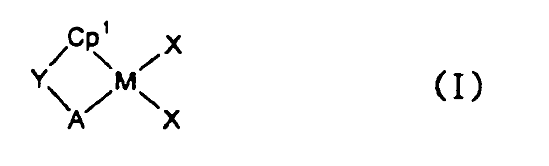 where M represents a transition metal of Group IV of the Periodic Table such as titanium, zirconium or hafnium;
Cp¹ is a non-substituted cyclopentadienyl group; a cyclopentadienyl group with 1 to 4 linear alkyl substitutes; an indenyl group; a tetrahydroindenyl group; a substituted indenyl group; a fluorenyl group; an octahydrofluorenyl group; or a substituted fluorenyl group;
Y is a hydrogen or a silyl group of C₁₋₁₀, an alkyl group of C₁₋₁₀, an aryl group of C₁₋₁₀, or a combination thereof;
A is an alkyl group of C₁₋₃₀, an alkylamide group of C₁₋₃₀ or a derivative of cyclopentadienyl group which is identical to Cp¹; and
X is selected from the group consisting of a hydrogen atom, a halogen atom, an alkyl group, an aryl group or a diene group.

8. The ethylene/aromatic vinyl compound/vinylnorbornene terpolymer of claim 7, in which said vinylnorbornene portion has terminal double bonds.

9. The ethylene/aromatic vinyl compound/vinylnorbornene terpolymer of claim 7, wherein said terpolymer shows distinct peaks near 112 and 114 ppm in the ¹³C-NMR spectrum due to the terminal double bonds.

10. The ethylene/aromatic vinyl compound/vinylnorbornene terpolymer of claim 7, wherein said terpolymer shows stretching bands due to the terminal double bonds of C=C and =C-H near 1636 and 995 cm⁻¹, respectively, in the FT-IR spectrum.

11. The ethylene/aromatic vinyl compound/vinylnorbornene terpolymer of claim 7, wherein said terpolymer has a weight average molecular weight of at least 5,000.

## Patentansprüche

1. Verfahren zum Herstellen eines Ethylen/aromatische Vinylverbindung/Vinylnorbonen-Terpolymers durch Copolymerisieren von 50 bis 90 Mol-% Ethylen, mindestens 0,1 Mol-% einer aromatischen Vinylverbindung und 0,01 bis 10 Mol-% eines Vinylnorbonens unter Verwendung eines Katalysatorsystems bestehend aus einer Übergangsmetallverbindung dargestellt durch die nachfolgende Formel (I) und einem Cokatalysator: 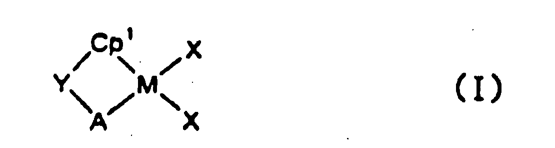 wobei M ein Übergangsmetall aus Gruppe IV des Periodensystems, wie Titan, Zirkonium oder Hafnium darstellt;
Cp¹ eine unsubstituierte Cyclopentadienylgruppe; eine Cyclopentadienylgruppe mit 1 bis 4 linearen Alkylsubstituenten; eine Indenylgruppe; eine Tetrahydroindenylgruppe; eine substituierte Indenylgruppe; eine Fluorenylgruppe; eine Octahydrofluorenylgruppe; oder eine substituierte Fluorenylgruppe ist;
Y ein Wasserstoff oder eine C₁₋₁₀-Silylgruppe, eine C₁₋₁₀-Alkylgruppe, eine C₁₋₁₀-Arylgruppe oder eine Kombination daraus ist;
A eine C₁₋₃₀-Alkylgruppe, eine C₁₋₃₀-Alkylamidgruppe oder ein Derivat einer Cyclopentadienylgruppe, das identisch ist mit Cp¹, ist; und
X ausgewählt aus der Gruppe bestehend aus einem Wasserstoffatom, einem Halogenatom, einer Alkylgruppe, einer Arylgruppe oder einer Diengruppe ist.

2. Verfahren nach Anspruch 1, wobei der genannte Cokatalysator eine organometallische Verbindung oder ein Gemisch aus einer nicht koordinierten Lewissäure und einer Alkylaluminiumverbindung ist.

3. Verfahren nach Anspruch 2, wobei die genannte organometallische Verbindung ein Alkylaluminoxan oder eine Organoaluminiumverbindung ist.

4. Verfahren nach Anspruch 3, wobei das genannte Alkylaluminoxan Methylaluminoxan (MAO) oder ein modifiziertes Methylaluminoxan (MMAO) ist.

5. Verfahren nach Anspruch 3, wobei die genannte Organoaluminiumverbindung ein Alkylaluminoxan, das eine Wiederholungseinheit der folgenden Formel (II) besitzt, beinhaltet, und das genannte Alkylaluminoxan ein lineares Alkylaluminoxan dargestellt durch die folgende Formel (III), und ein cyclisches Alkylaluminoxan dargestellt durch die folgende Formel (IV) beinhaltet: 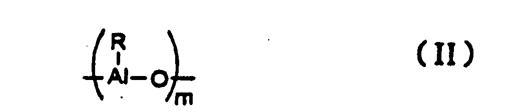 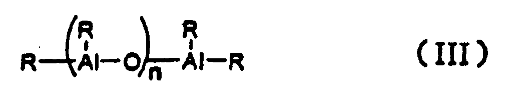 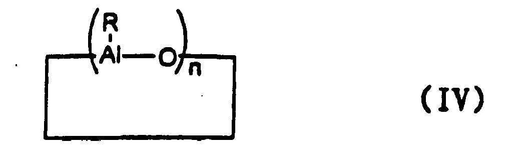 wobei R ein Wasserstoff, C₁₋₅-Alkylgruppe oder C₁₋₆-Arylgruppe ist und jeweils gleich oder unterschiedlich voneinander sein kann, und m und n ganze Zahlen von 0 bis 100 sind.

6. Verfahren nach Anspruch 2, wobei die genannte nicht koordinierte Lewissäure ausgewählt ist aus der Gruppe bestehend aus N,N-Dimethylaniliniumtetrakis(pentafluorphenyl)borat, Triphenylcarbeniumtetrakis(pentafluorphenyl)borat, Ferroceriumtetrakis(pentafluorphenyl)borat und Tris(pentafluorphenyl)borat.

7. Ethylen/aromatische Vinylverbindung/Vinylnorbonen-Terpolymer hauptsächlich bestehend aus 50 bis 90 Mol-% Ethylen, mindestens 0,1 Mol-% einer aromatischen Vinylverbindung und 0,01 bis 10 Mol-% Vinylnorbonen, welches polymerisiert ist unter Verwendung eines Katalysatorsystems bestehend aus einer Übergangsmetallverbindung dargestellt durch die nachfolgende Formel (I) und einem Cokatalysator: 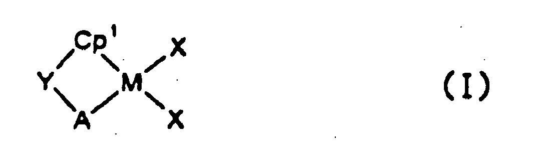 wobei M ein Übergangsmetall aus Gruppe IV des Periodensystems, wie Titan, Zirkonium oder Hafnium darstellt;
Cp¹ eine unsubstituierte Cyclopentadienylgruppe; eine Cyclopentadienylgruppe mit 1 bis 4 linearen Alkylsubstituenten; eine Indenylgruppe; eine Tetrahydroindenylgruppe; eine substituierte Indenylgruppe; eine Fluorenylgruppe; eine Octahydrofluorenylgruppe; oder eine substituierte Fluorenylgruppe ist;
Y ein Wasserstoff oder eine C₁₋₁₀-Silylgruppe, eine C₁₋₁₀-Alkylgruppe, eine C₁₋₁₀-Arylgruppe oder eine Kombination daraus ist;
A eine C₁₋₃₀-Alkylgruppe, eine C₁₋₃₀-Alkylamidgruppe oder ein Derivat einer Cyclopentadienylgruppe, das identisch ist mit Cp¹, ist; und
X ausgewählt aus der Gruppe bestehend aus einem Wasserstoffatom, einem Halogenatom, einer Alkylgruppe, einer Arylgruppe oder einer Diengruppe ist.

8. Ethylen/aromatische Vinylverbindung/Vinylnorbonen-Terpolymer nach Anspruch 7, in welchem der genannte Vinylnorbonenteil endständige Doppelbindungen besitzt.

9. Ethylen/aromatische Vinylverbindung/Vinylnorbonen-Terpolymer nach Anspruch 7, wobei das genannte Terpolymer eindeutige Peaks bei 112 und 114 ppm im ¹³C-NMR-Spektrum aufgrund der endständigen Doppelbindungen aufweist.

10. Ethylen/aromatische Vinylverbindung/Vinylnorbonen-Terpolymer nach Anspruch 7, wobei das genannte Terpolymer Streckbanden aufgrund der endständigen Doppelbindungen von C=C und =C-H bei 1.636 und 995 cm⁻¹ im FT-IR-Spektrum aufweist.

11. Ethylen/aromatische Vinylverbindung/Vinylnorbonen-Terpolymer nach Anspruch 7, wobei das genannte Terpolymer ein gewichtsgemitteltes Molekulargewicht von mindestens 5.000 besitzt.

## Revendications

1. Procédé de préparation d'un terpolymère d'éthylène/composé vinylique aromatique/vinylnorbornène par copolymérisation de 50-90 % en moles d'éthylène, d'au moins 0,1 % en moles d'un composé vinylique aromatique et de 0,01-10 % en moles d'un vinylnorbornène avec un système catalytique constitué d'un composé d'un métal de transition représenté par la formule (I) suivante et d'un co-catalyseur : 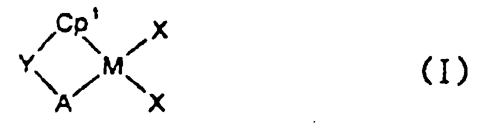 où M représente un métal de transition du groupe IV du tableau périodique tel que le titane, le zirconium ou l'hafnium ;
Cp¹ est un groupe cyclopentadiényle non substitué ; un groupe cyclopentadiényle avec 1 à 4 substituants alkyle linéaires ; un groupe indényle ; un groupe tétrahydroindényle ; un groupe indényle substitué ; un groupe fluorényle ; un groupe octahydrofluorényle ; ou un groupe fluorényle substitué ;
Y est un hydrogène ou un groupe silyle en C₁₋₁₀, un groupe alkyle en C₁₋₁₀, un groupe aryle en C₁₋₁₀, ou une combinaison de ceux-ci ;
A est un groupe alkyle en C₁₋₃₀, un groupe alkylamide en C₁₋₃₀ ou un dérivé de groupe cyclopentadiényle qui est identique à Cp¹ ; et
X est choisi dans le groupe constitué d'un atome d'hydrogène, d'un atome d'halogène, d'un groupe alkyle, d'un groupe aryle ou d'un groupe diène.

2. Procédé de la revendication 1, dans lequel ledit co-catalyseur est un composé organométallique ou un mélange d'un acide de Lewis non coordiné et d'un composé d'alkylaluminium.

3. Procédé de la revendication 2, dans lequel ledit composé organométallique est un alkylaluminoxane ou un composé d'organoaluminium.

4. Procédé de la revendication 3, dans lequel ledit alkylaluminoxane est un méthylaluminoxane (MAO) ou un méthylaluminoxane modifié (MMAO).

5. Procédé de la revendication 3, dans lequel ledit composé d'organoaluminium inclut un alkylaluminoxane ayant un motif répétitif de formule (II) suivante, ledit alkylaluminoxane incluant un alkylaluminoxane linéaire représenté par la formule (III) suivante, et un alkylaluminoxane cyclique représenté par la formule (IV) suivante : 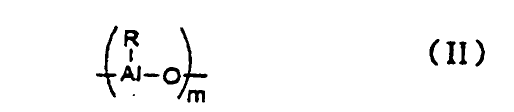 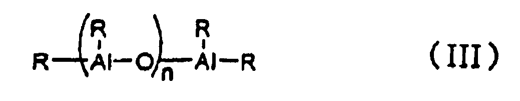 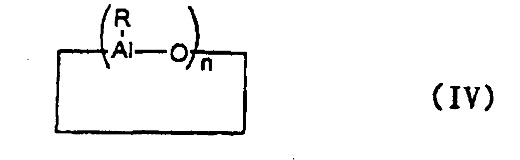 où chaque R est un hydrogène, un groupe alkyle en C₁₋₅ ou un groupe aryle en C₁₋₆ et peut être identique aux autres ou différent des autres, et m et n sont chacun un nombre entier de 0 à 100.

6. Procédé de la revendication 2, dans lequel ledit acide de Lewis non coordiné est choisi dans le groupe constitué du tétrakis(pentafluorophényl)borate de N,N-diméthylanilinium, du tétrakis(pentafluorophényl)borate de triphénylcarbénium, du tétrakis(pentafluorophényl)borate de ferrocérium, et du tris(pentafluorophényl)borate.

7. Terpolymère d'éthylène/composé vinylique aromatique/vinylnorbornène constitué essentiellement de 50-90 % en moles d'éthylène, d'au moins 0,1 % en moles d'un composé vinylique aromatique et de 0,01-10 % en moles d'un vinylnorbornène, qui est polymérisé avec un système catalytique constitué d'un composé d'un métal de transition représenté par la formule (I) suivante et d'un co-catalyseur : 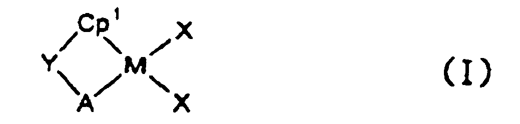 où M représente un métal de transition du groupe IV du tableau périodique tel que le titane, le zirconium ou l'hafnium ;
Cp¹ est un groupe cyclopentadiényle non substitué ; un groupe cyclopentadiényle avec 1 à 4 substituants alkyle linéaires ; un groupe indényle ; un groupe tétrahydroindényle ; un groupe indényle substitué ; un groupe fluorényle ; un groupe octahydrofluorényle ; ou un groupe fluorényle substitué ;
Y est un hydrogène ou un groupe silyle en C₁₋₁₀, un groupe alkyle en C₁₋₁₀, un groupe aryle en C₁₋₁₀, ou une combinaison de ceux-ci ;
A est un groupe alkyle en C₁₋₃₀, un groupe alkylamide en C₁₋₃₀ ou un dérivé de groupe cyclopentadiényle qui est identique à Cp¹ ; et
X est choisi dans le groupe constitué d'un atome d'hydrogène, d'un atome d'halogène, d'un groupe alkyle, d'un groupe aryle ou d'un groupe diène.

8. Terpolymère d'éthylène/composé vinylique aromatique/vinylnorbornène de la revendication 7, dans lequel ladite partie vinylnorbornène comporte des doubles liaisons terminales.

9. Terpolymère d'éthylène/composé vinylique aromatique/vinylnorbornène de la revendication 7, dans lequel ledit terpolymère présente des pics distincts près de 112 et 114 ppm dans le spectre de RMN ¹³C dus aux doubles liaisons terminales.

10. Terpolymère d'éthylène/composé vinylique aromatique/vinylnorbornène de la revendication 7, dans lequel ledit terpolymère présente des bandes d'étirement dues aux doubles liaisons terminales C=C et =C-H près de 1636 et 995 cm⁻¹, respectivement, dans le spectre FTIR.

11. Terpolymère d'éthylène/composé vinylique aromatique/vinylnorbornène de la revendication 7, dans lequel ledit terpolymère a un poids moléculaire moyen en poids d'au moins 5000.
